(19) Europäisches Patentamt / European Patent Office / Office européen des brevets

(11) **EP 4 045 290 B1**

(12) # EUROPEAN PATENT SPECIFICATION

(45) Date of publication and mention of the grant of the patent: **08.11.2023 Bulletin 2023/45**

(21) Application number: **20789979.0**

(22) Date of filing: **13.10.2020**

(51) International Patent Classification (IPC):
***B29C 64/106*** *(2017.01)* ***B29C 64/118*** *(2017.01)*
***B29C 64/321*** *(2017.01)* ***B33Y 10/00*** *(2015.01)*
***B33Y 30/00*** *(2015.01)* ***B33Y 70/10*** *(2020.01)*
***C04B 35/01*** *(2006.01)* ***C04B 35/053*** *(2006.01)*
***C04B 35/057*** *(2006.01)* ***C04B 35/111*** *(2006.01)*
***C04B 35/14*** *(2006.01)* ***C04B 35/486*** *(2006.01)*
***C04B 35/505*** *(2006.01)* ***C04B 35/565*** *(2006.01)*
***C04B 35/58*** *(2006.01)* ***C04B 35/622*** *(2006.01)*
***C04B 35/581*** *(2006.01)* ***C04B 35/587*** *(2006.01)*
***C04B 35/626*** *(2006.01)* ***B22F 1/103*** *(2022.01)*

(52) Cooperative Patent Classification (CPC):
(C-Sets available)
**B29C 64/106; B22F 1/10; B22F 1/103; B22F 1/148; B22F 10/18; B22F 12/13; B22F 12/53; B29C 64/118; B29C 64/321; B33Y 10/00; B33Y 30/00; B33Y 70/10; C04B 35/01; C04B 35/053; C04B 35/057;** (Cont.)

(86) International application number: **PCT/EP2020/078744**

(87) International publication number: **WO 2021/074129 (22.04.2021 Gazette 2021/16)**

(54) **A PROCESS FOR PRODUCING A THREE-DIMENSIONAL (3D) OBJECT EMPLOYING GRANULATES**

VERFAHREN ZUR HERSTELLUNG EINES DREIDIMENSIONALEN (3D) OBJEKTS MIT GRANULATEN

PROCÉDÉ DE PRODUCTION D’UN OBJET EN TROIS DIMENSIONS (3D) UTILISANT DES GRANULÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.10.2019 EP 19203927**

(43) Date of publication of application: **24.08.2022 Bulletin 2022/34**


(73) Proprietor: **BASF SE**
**67056 Ludwigshafen am Rhein (DE)**

(72) Inventors:
- **ARBTER, Rene**
  **67056 Ludwigshafen (DE)**
- **STAUDT, Thorsten Martin**
  **67056 Ludwigshafen (DE)**
- **SEILER, Rudolf**
  **67056 Ludwigshafen (DE)**
- **STEINKE, Oleg**
  **67167 Erpolzheim (DE)**
- **SCHWENDY, Sascha Tim**
  **67056 Ludwigshafen (DE)**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(74) Representative: **BASF IP Association**
**BASF SE**
**GBI-C006**
**67056 Ludwigshafen (DE)**

(56) References cited:
**EP-A1- 3 112 133**
**WO-A1-2016/012486**
**WO-A1-2019/116088**
**WO-A2-2019/079704**
**CN-A- 110 315 746**
**US-A1- 2015 321 419**

(52) Cooperative Patent Classification (CPC): (Cont.)
**C04B 35/111; C04B 35/14; C04B 35/486; C04B 35/505; C04B 35/565; C04B 35/58071; C04B 35/581; C04B 35/587; C04B 35/622; C04B 35/62695; C04B 35/63472; C22C 47/14; C22C 49/14;** B22F 2998/10; B22F 2999/00; B33Y 80/00; C04B 2235/3201; C04B 2235/5296; C04B 2235/5427; C04B 2235/5436; C04B 2235/5445; C04B 2235/6026; Y02P 10/25

C-Sets
B22F 2998/10, B22F 10/18, B22F 10/64;
B22F 2999/00, B22F 10/64, B22F 3/1021

## Description

The present invention relates to a process for producing a three-dimensional (3D) object by employing a three-dimensional (3D) printing process wherein a granulate selected from a granulate comprising at least one inorganic powder and at least one polymer and having an particle size in the range of 0.2 to 1 mm is used as a starting material to be printed within said 3D printing process, employing a 3D extrusion printer. In one preferred embodiment, the process according to the present invention is employed for producing a 3D green body. The invention further relates to 3D objects as such and the corresponding processes for obtaining such 3D objects, in particular a 3D green body, a 3D brown body and a 3D sintered body.

A task often encountered in recent times is the production of prototypes and models of metallic or ceramic bodies, in particular of prototypes and models exhibiting complex geometries. Especially for the production of prototypes, a rapid production process is necessary. For this so called "rapid prototyping", different processes are known. One of the most economical is the fused filament fabrication process (FFF), also known as "fused deposition modeling" (FDM).

The fused filament fabrication process (FFF) is an additive manufacturing technology. A three-dimensional object is produced by extruding a thermoplastic material through a nozzle to form layers as the thermoplastic material hardens after extrusion. The nozzle is heated to heat the thermoplastic material past its melting and/or glass transition temperature and is then deposited by the extrusion head on a base to form the three-dimensional object in a layer-wise fashion. The thermoplastic material is typically selected and its temperature is controlled so that it solidifies substantially immediately upon extrusion or dispensing onto the base with the build-up of multiple layers to form the desired three-dimensional object.

In order to form each layer, drive motors are provided to move the base and/or the extrusion nozzle (dispending head) relative to each other in a predetermined pattern along the x-, y- and z-axis. The FFF-process was first described in US 5,121,329.

Typical materials for the production of three-dimensional objects are thermoplastic materials. The production of three-dimensional metallic or ceramic objects by fused filament fabrication is only possible if the metal or ceramic material has a low melting point so that it can be heated and melted by the nozzle. If the metal or ceramic material has a high melting point, it is necessary to provide the metal or ceramic material in a binder composition to the extrusion nozzle. The binder composition usually comprises a thermoplastic material. When depositing the mixture of a metal or ceramic material in a binder on a base, the formed three-dimensional object is a so called "green body", which comprises the metal or ceramic material in a binder. To receive the desired metallic or ceramic object, the binder has to be removed and finally the object has to be sintered. The three-dimensional object which is formed after removing the binder is a so called "brown body"; the three-dimensional object which is formed after sintering is a so called "sintered body".

WO 2016/012486 describes a fused filament fabrication process in which a mixture comprising an inorganic powder and a binder is used to produce a three-dimensional green body. The fused filament fabrication process is followed by a debinding step, in which at least part of the binder is removed from the three-dimensional green body to form a three-dimensional brown body. The debinding step is carried out by treating the three-dimensional green body in an atmosphere comprising a gaseous acid and optionally a carrier gas at temperatures up to 180°C in order to avoid the condensation of the acid. Suitable acids are inorganic acids such as hydrogen halides and nitric acid, and organic acids such as formic acid and acetic acid. After the debinding step, the formed three-dimensional brown body is sintered to form a three-dimensional sintered body.

WO 2017/009190 describes a filament for the use in a fused filament fabrication process to prepare a three-dimensional green body. The filament comprises a core material which is coated with a layer of shell material. The core material comprises an inorganic powder and a binder. The preparation of the three-dimensional brown body as well as the three-dimensional sintered body can be prepared analogously as described in WO 2016/012486. However, the core-shell-filaments described in WO 2017/009190 are more stable and can be easily rolled on a spool, which renders them easier to store and process than those disclosed in WO 2016/012486.

EP 3 112 133 describes a 3D printer which can use pellets of various materials and produce a large molded object without requiring an inactive gas. ABS with a particle diameter of 3 mm is prepared as a pellet material.

WO 2019/116088 describes a three dimensional printer which may include at least one feed chamber supplying a solidified material, an extruder configured to receive the solidified material from the at least one feed chamber and to process the solidified material into a molten phase, a melt pump configured to receive the molten phase from the extruder, and a printing head configured to receive the molten phase from the melt pump and to deposit the molten phase in successive layers to form a three-dimensional object. The solidified material can comprise a polymer granulate.

CN 110 315 746 A describes a small length-to-diameter ratio extrusion screw for 3D printing, characterized in that it comprises an extrusion screw body comprising a clamp section, a feed end and a compression extrusion section, which are successively connected, and the feed end and the compression extrusion section are provided with thread grooves, and the groove depth of the thread grooves gradually decreases from the end of the feed end near the end of the clamp section to the end of the compression extrusion section. It further discloses an extrusion device including said

extrusion screw. To better feed the conventional thermoplastic particulate material having a particle size of 2 to 5 mm into the extrusion device, it is crushed into the particle size of 0.5 to 2 mm.

US 2015/321419 A1 describes a method for producing three-dimensional physical objects of a predetermined shape by sequentially extruding multiple layers of a solidifying material in a desired pattern in an extrusion assembly including, but not limited to, a barrel, a screw and a nozzle. The extrusion assembly extrudes spherical or cylindrical pellets typically ranging in size from 1 to 3 mm from various plastics.

WO 2019/079704 A2 discloses methods for 3D printing green bodies and for producing brown and sintered bodies.

As described above, the FFF/FDM method is one of the most commonly used 3D printing technologies. However, several variants of the FDM/FFF method exist, sometimes such variants are summarized under the term "FDM/FFF process", and sometimes such variants are even considered as being individual/different 3D printing techniques. One of such variations of the commonly used FDM/FFM method can be found by replacing the filament used as the "classical starting material" within a FDM/FFF printing process by a granulate material. The granulate material may be completely or overwhelmingly identical in terms of its chemical composition compared to the corresponding filament used in a conventional FFF/FDM printing process, but the granulate differs from the corresponding filaments in terms of its shape. A disadvantage of the filament approach is the fact that the filaments are usually rolled on a spool and the filament may break when being transferred from the spool into the printing head of a 3D extrusion printer.

In contrast to that, granulate-based 3D extrusion printing techniques are usually cheaper compared to the corresponding (conventional filament based) FFF/FDM printing techniques since the starting material to be printed within the corresponding 3D technique does not have to be provided in the shape of a filament.

In accordance with a conventional FDM/FFF printing technique in terms of the chemical composition of the filament, various granulates can be employed as starting materials within a granulate-based 3D extrusion printing technique/process. The granulates to be employed are usually based on a polymer, in particular a thermoplastic material which can be heated to a temperature past its melting and/or glass transition temperature within the 3D extrusion printing process. The granulates to be employed also contain some inorganic powder such as metal, metal alloy or ceramic material, besides the above mentioned polymer, in particular the thermoplastic material. If so, a 3D green body is obtained by a corresponding 3D printing process. In analogy to conventional FFF/FDM printing techniques, the organic/polymeric part of such a 3D green body may be removed in order to obtain 3D metallic or ceramic objects such as 3D brown bodies and 3D sintered bodies.

However, a problem with granulate-based 3D extrusion printing techniques can be seen in the flowability of the feed stock (the granulate to be employed). In order to obtain a good quality of the 3D object to be printed, the granulate has to be provided in a uniform manner to the printing head of the 3D extrusion printer. In case of a nonuniform/uneven flowability/provision of the feed stock to the extrusion head of the 3D printer, both the speed of printing as well as the quality of the product to be printed is significantly reduced since the extrusion rate from the nozzle varies considerably. Therefore, the object underlying the present invention is to provide a new process for producing three-dimensional objects such as 3D green bodies that do not exhibit the above-mentioned disadvantages of the prior art or only to a lesser extent.

This object is achieved by a process for producing a three-dimensional (3D) object by employing a three-dimensional (3D) printing process comprising the steps a) to e) as follows:

a) providing at least one granulate having an particle size in the range of 0.2 to 1 mm,

b) feeding the at least one granulate with at least one screw located at least partially inside the housing of a three-dimensional (3D) extrusion printer towards at least one nozzle of the 3D extrusion printer,

c) heating the at least one granulate inside the housing of the 3D extrusion printer,

d) extruding the at least one heated granulate obtained in step c) through the at least one nozzle in order to obtain at least one extruded strand,

e) forming the 3D object layer by layer from the at least one extruded strand obtained in step d),

wherein the at least one granulate is selected from a granulate comprising at least one inorganic powder and at least one polymer.

It has surprisingly been found that due to the employment of a granulate having an particle size in the range of 0.2 to 1 mm, within the process of the present invention the flowability of the feed stock is significantly improved, resulting in a faster and/or more stable 3D extrusion printing process employing granulate-based materials.

By consequence, the material to be printed is provided in a more uniform or steady way compared to processes

according to the prior art employing granulate without said specific particle sizes. Due to the improved flowability of the granulate employed within the inventive process, a higher quality can be obtained within the 3D objects to be printed in terms of a more uniform thickness between the individual layers of the printed object. The same applies to a better density, an improved adhesion and firmness between the individual layers as well a reduced roughness of the surface.

In one particular embodiment of the present invention, wherein the screw feeds the granulate in vertical direction or in an angle of not more than 60° different to the vertical direction towards the nozzle within the 3D extrusion printer, a further advantage can be seen in the fact that the heating of the container for the granulate can be avoided, which causes in a reduction of the flowability due to (increased) clogging of the feed stock, for example by unintended bounding of the individual granulates.

Furthermore, the employment of stirrers within the storage containers for the granulate can be avoided within the process according to the present invention since stirring of the granulates very often causes an unintended size reduction of the granulate, leading to a very high amount of very small granulate, especially by prolonged stirring. A high amount of very small granulate also has a negative impact on the flowability of the granulate leading to worse quality of the 3D objects to be printed.

One further advantage of the present invention can be seen in the fact that due to the employment of a granulate-based 3D extrusion printing technique also rather soft material such as granulates comprising at least one thermoplastic polyurethane and/or granulate comprising polymers containing fibers or other fillers can be successfully employed. Within conventional FFF/FDM printing techniques, it is not possible at all or it is rather complicated to employ the aforementioned different types of material in the shape of a filament.

Another advantage of the present invention can be found within those embodiments wherein 3D extrusion printers are employed, comprising a so called "mini extrusion unit". 3D extrusion printers comprising a mini extrusion unit are usually those type of 3D extrusion printers wherein the screw employed has a rather low length to diameter ratio. Preferably, the length to diameter ratio of such a screw is below 12, more preferably below 8. Due to the employment of granulate having a rather small particle size in the range of 0.2 to 1 mm as well as the employment of screws with the below mentioned rather low length to diameter ratio, the extrusion of the granulate can be carried out in a more uniform, smoother and/or softer way since the granulate is distributed within the fragment of the 3D extrusion printer containing the screw in a better and/or uniform way.

Within the context of the present invention, the term "particle size" or "particle size in the range of 0.2 to 1 mm" (in connection with the respective granulate) has the following meaning. The respective granulate has a d10-value of at least 0.2 mm and a d90-value of not more than 1 mm. The d10-value is always smaller than the corresponding d90-value in connection for the respective range to be considered (such as 0.2 to 1 mm).

"D10-value" means that 10% by volume (of the respective granulate) has a particle size of not more than 0.2 mm in connection with the specific range of 0.2 to 1 mm. "D90-value" means that 90% by volume (of the respective granulate) has a particle size of not more than 1 mm in connection with the specific range of 0.2 to 1 mm.

In case the range to be considered is different, for example from 0.4 to 0.9 mm, the d10- and d90-values are determined accordingly (d10-value is at least 0.4 mm and d90-value is not more than 0.9 mm for this specific range).

The particle size of the respective granulate is determined by a method known to a person skilled in the art, for example by using a Camsizer® X2 apparatus. Unless indicated otherwise, the values relate to volumetric determination of the respective particle sizes. Preferably, the respective values are related on a volume based Q3-distribution.

In connection with methods/apparatuses for determination of particle sizes (such as the Camsizer® X2 apparatus), the following has usually to be considered: In case of particles which are not spherical (sphericity of < 0.9 for the individual particle), the respective particle size for the individual particle is determined/measured as the equivalent spherical diameter of a spherical particle, which has the same volume as the measured particle but having a spherical shape instead. Typical measurement equipment for dynamic image particle size analysis methods can determine this equivalent spherical diameter.

The invention is specified in more detail as follows.

A first subject-matter of the present invention is a process for producing a three-dimensional (3D) object by employing a three-dimensional (3D) printing process comprising the steps a) to e) as follows:

a) providing at least one granulate having an particle size in the range of 0.2 to 1 mm,

b) feeding the at least one granulate with at least one screw located at least partially inside the housing of a three-dimensional (3D) extrusion printer towards at least one nozzle of the 3D extrusion printer,

c) heating the at least one granulate inside the housing of the 3D extrusion printer,

d) extruding the at least one heated granulate obtained in step c) through the at least one nozzle in order to obtain at least one extruded strand,

e) forming the 3D object layer by layer from the at least one extruded strand obtained in step d),

wherein the at least one granulate is selected from a granulate comprising at least one inorganic powder and at least one polymer.

As already described above, the three-dimensional (3D) printing technique as such is known to a person skilled in the art, including 3D printing techniques based on granulate material. By consequence, also three-dimensional (3D) extrusion printers as such, suitable to be employed in such a 3D printing process, are known to a person skilled in the art. The same holds true for a three-dimensional (3D) object as such, obtained by a 3D printing technique, which is also known to a person skilled in the art. By consequence, conventional 3D extrusion printers can be employed within the inventive process and/or a person skilled in the art knows how to modify such conventional 3D extrusion printers due to his technical skills in order to be able to carry out the inventive process.

Step a) of the process of the present invention is carried out by providing at least one granulate having a particle size in the range of 0.2 to 1 mm, preferably the range is of 0.4 to 0.9 mm, more preferably the range is of 0.6 to 0.8 mm.

It is preferred that the granulate employed in step a) has

i) a particle size in the range of 0.4 to 0.9 mm, and/or
ii) a round shape.

The term "round shape" means that more than 50% of the respective particles have a sphericity of > 0.7, more preferably of > 0.9. Preferably more than 70%, even more preferably more than 90% of the respective particles have a sphericity of > 0.7, more preferably of > 0.9. The sphericity can be determined by methods known to a skilled person. A suitable test method is, for example, an optical test method by particle characterizing systems (e.g. Camsizer®).

In a preferred embodiment, the sphericity (SPHT) is determined according to ISO 9276-6, wherein the sphericity (SPHT) is defined by formula (I)

$$SPHT = \frac{4\pi A}{p^2} = Circularity^2 \qquad (I)$$

wherein
p is the measured perimeter/circumference of a particle projection and A is the measured area covered by a particle projection. The proportion of non-spherical particles is defined as the proportion whose sphericity is not more than 0.7, based on volume.

The granulate having a particle size in the range of 0.2 to 1 mm can be obtained from conventional granulate (i. e. granulate not restricted to a specific average particle size) by any method known to a person skilled in the art. It is preferred that the specific granulate employed within step a) is obtained (from conventional granulate having no restriction on the individual particle size)

i) by sieving, preferably by sieving through a perforated plate, and/or
ii) by strand extrusion followed by cutting the obtained strands, preferably by cutting with a rotating knife, and/or
iii) by matrix pressing or grinding, both followed by sieving.

Any granulate known to a person skilled in the art, having a particle size in the range of 0.2 to 1 mm can be employed within the process according to the present invention. One individual granulate may be employed or a mixture of two or more granulates may be employed.

The granulate to be employed within step a) may be selected from at least one granulate (which is known to a person skilled in the art in respect of its individual chemical composition) as follows:

i) a granulate comprising at least one polymer, preferably at least one thermoplastic polymer,

ii) a granulate comprising at least one inorganic powder and at least one polymer, preferably the inorganic powder is a powder of at least one inorganic material selected from the group consisting of a metal, a metal alloy and a ceramic material,

iii) a granulate comprising at least one core material (CM) coated with a layer of at least one shell material (SM),

iv) a granulate comprising at least one fibrous filler (FF) and at least one polymer, preferably the fibrous filler (FF) is at least one carbon fiber, or

v) a granulate comprising at least one thermoplastic polyurethane.

In case the respective granulate contains at least one fibrous filler (FF), any fibrous filler which is known to a person skilled in the art can be employed. Preferably, the at least one fibrous filler (FF) is selected from synthetic fibers and inorganic fibers, preferably from aramid fibers, glass fibers and carbon fibers, more preferably from glass fibers composed of E, A, or C glass and carbon fibers, most preferably from carbon fibers.

According to the claim invention, the respective granulate contains at least one polymer, preferably at least one thermoplastic polymer, any polymer or thermoplastic polymer known to a person skilled in the art can be employed. Suitable examples of thermoplastic polymers are also described below in the context of the thermoplastic polymer (TP1).

According to the claimed invention, the respective granulate contains also at least one inorganic powder, any inorganic powder known to a person skilled in the art can be employed. Examples of inorganic powders are disclosed, for example, in WO 2016/012486. Preferably, the inorganic powder is a powder of at least one inorganic material selected from the group consisting of a metal, a metal alloy and a ceramic material. Such type of inorganic material is also disclosed in WO 2016/012486.

It is preferred that the at least one granulate is a mixture (M) comprising

(a) from 40 to 75% by volume of an inorganic powder (IP) based on the total volume of the mixture (M),

(b) from 25 to 60% by volume based on the total volume of the mixture (M) of a binder (B) comprising

(b1) from 50 to 98% by weight of at least one polyoxymethylene (POM) based on the total weight of the binder (B),

(b2) from 2 to 35% by weight of at least one polyolefin (PO) based on the total weight of the binder (B),

(b3) from 0 to 40% by weight of at least one further polymer (FP) based on the total weight of the binder (B).

In connection with the aforementioned definition of the mixture (M), it is preferred that component (a) is present in an amount from 40 to 70% by volume and component (b) is present in an amount from 30 to 60% by volume. In case component (b3) is present, the respective amount is at least 2% by weight. Due to the optional presence of component (b3) within component (b), the amount of component (b1) is reduced accordingly.

Within the context of the present invention, a granulate is even more preferred wherein

i) the mixture (M) comprises as component (c) from 0.1 to 5% by volume of at least one dispersant based on the total volume of the mixture (M), and/or

ii) the inorganic powder (IP) is a powder of at least one inorganic material selected from the group consisting of a metal, a metal alloy and a ceramic material, and/or

iii) component (b1) is a polyoxymethylene (POM) copolymer which is prepared by polymerization of

- from at least 50 mol-% of a formaldehyde source (b1a),
- from 0.01 to 20 mol-% of at least one first comonomer (b1b) of the general formula (II)

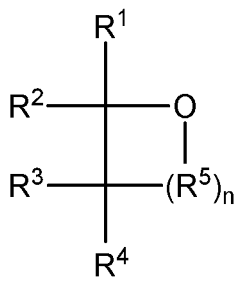

(II),

wherein

$R^1$ to $R^4$ are each independently of one another selected from the group consisting of H, $C_1$-$C_4$-alkyl and halogen-substituted $C_1$-$C_4$-alkyl;

$R^5$ is selected from the group consisting of a chemical bond, a $(-CR^{5a}R^{5b}-)$ group and a $(-CR^{5a}R^{5b}O-)$ group,

wherein

$R^{5a}$ and $R^{5b}$ are each independently of one another selected from the group consisting of H and unsubstituted or at least monosubstituted $C_1$-$C_4$-alkyl,

wherein the substituents are selected from the group consisting of F, Cl, Br, OH and $C_1$-$C_4$-alkyl;

n is 0, 1, 2 or 3;

and

- from 0 to 20 mol-% of at least one second comonomer (b1c) selected from the group consisting of a compound of formula (III) and a compound of formula (IV)

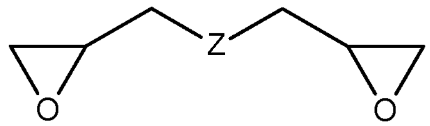

(III),

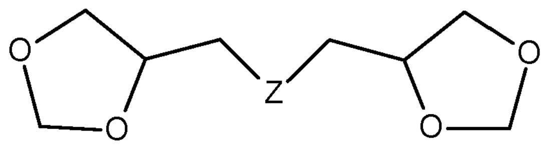

(IV),

wherein

Z is selected from the group consisting of a chemical bond, an (-O-) group and an $(-O-R^6-O-)$ group,

wherein

$R^6$ is selected from the group consisting of unsubstituted $C_1$-$C_8$-alkylene and $C_3$-$C_8$-cycloalkylene, and/or

iv) the further polymer (FP) is at least one further polymer (FP) selected from the group consisting of a polyether, a polyurethane, a polyepoxide, a polyamide, a vinyl aromatic polymer, a poly(vinyl ester), a poly(vinyl ether), a poly(alkyl (meth)acrylate) and copolymers thereof.

"An inorganic powder (IP)" means precisely one inorganic powder (IP) as well as a mixture of two or more inorganic powders (IP). The same holds true for the term "an inorganic material". "An inorganic material" means precisely one inorganic material as well as mixtures of two or more inorganic materials.

"A metal" means precisely one metal as well as mixtures of two or more metals. A metal within the present invention can be selected from any metal of the periodic table of the elements which is stable under the conditions of a fused filament fabrication process and which can form three-dimensional objects. Preferably, the metal is selected from the group consisting of aluminum, yttrium, titanium, zirconium, vanadium, niobium, chromium, molybdenum, tungsten, manganese, iron, carbonyl iron powder (CIP), cobalt, nickel, copper, silver, zinc and cadmium, more preferably, the metal is selected from the group consisting of titanium, niobium, chromium, molybdenum, tungsten, manganese, iron, carbonyl iron powder (CIP), nickel and copper. With particular preference, the metal is selected from the group consisting of titanium, iron and carbonyl iron powder (CIP).

Carbonyl iron powder (CIP) is highly pure iron powder, prepared by chemical decomposition of purified iron pentacarbonyl.

"A metal alloy" means precisely one metal alloy as well as mixtures of two or more metal alloys. Within the context of the present invention, the term "metal alloy" means a solid solution or a partial solid solution, which exhibits metallic properties and comprises a metal and an other element. "A metal" means, as stated above precisely one metal and also mixtures of two or more metals. The same applies to "an other element". "An other element" means precisely

one other element and also mixtures of two or more other elements.

Solid solution metal alloys exhibit a single solid phase microstructure while partial solid solution metal alloys exhibit two or more solid phases. These two or more solid phases can be homogeneous distributed in the metal alloy, but they can also be heterogeneous distributed in the metal alloy.

The metal alloys can be prepared according to any process known to the person skilled in the art. For example, the metal can be melted and the other element can be added to the molten metal. However, it is also possible, to admix the metal and the other element directly to the mixture (M) without the preparation of a metal alloy before. The metal alloy will then be formed during the process of the preparation of the three-dimensional object.

Concerning the metal, the above-stated embodiments and preferences for the metal apply.

The other element can be selected from the metals described above. However, the other element differs from the metal comprised in the metal alloy.

The other element can be selected from any element of the periodic table, which forms a metal alloy that is stable under the conditions of a fused filament fabrication process or, which is stable or forms stable alloys with the metal under the conditions of a fused filament process. In a preferred embodiment of the present invention the other element is selected from the group consisting of the aforementioned metals, boron, carbon, silicon, phosphorous, sulfur, selenium and tellurium. Particularly preferably, the at least one other element is selected from the group consisting of the aforementioned metals, boron, carbon, silicon, phosphorous and sulfur.

Preferably, the metal alloy according to the present invention comprises steel.

"A ceramic material" means precisely one ceramic material as well as mixtures of two or more ceramic materials. In the context of the present invention, the term "ceramic material" means a non-metallic compound of a metal or a first metalloid, and a non-metal or a second metalloid.

"A metal" means precisely one metal and also mixtures of two or more metals. The same applies to "a non-metal" and "a first metalloid", as well as "a second metalloid". "A non-metal" means precisely one non-metal and also mixtures of two or more non-metals. "A first metalloid" means precisely one first metalloid and also mixtures of two or more first metalloids. "A second metalloid" means precisely one second metalloid and also mixtures of two or more second metalloids.

Non-metals are known per se to the person skilled in the art. The non-metal according to the present invention can be selected from any non-metal of the periodic table. Preferably, the at least one non-metal is selected from the group consisting of carbon, nitrogen, oxygen, phosphorus and sulfur.

Metalloids are as well known per se to the skilled person. The first metalloid and the second metalloid can be selected from any metalloid of the periodic table. Preferably, the first metalloid and/or the second metalloid are selected from the group consisting of boron and silicon. It should be clear that the first metalloid and the second metalloid differ from each other. For example, if the first metalloid is boron, then the second metalloid is selected from any other metalloid of the periodic table of the elements besides boron.

In one embodiment of the present invention, the ceramic material is selected from the group consisting of oxides, carbides, borides, nitrides and silicides. In a preferred embodiment the ceramic material is selected from the group consisting of MgO, CaO, $SiO_2$, $Na_2O$, $Al_2O_3$, $ZrO_2$, $Y_2O_3$, SiC, $Si_3N_4$, TiB and AlN. Particularly preferred, the ceramic material is selected from the group consisting of $Al_2O_3$, $ZrO_2$ and $Y_2O_3$.

For the preparation of the inorganic powder (IP), the inorganic material has to be pulverized. To pulverize the inorganic material, any method known to the person skilled in the art can be used. For example, the inorganic material can be ground. The grinding for example can take place in a classifier mill, in a hammer mill or in a ball mill.

The carbonyl iron powder (CIP) is prepared by chemical decomposition of purified iron pentacarbonyl.

The particle sizes of the inorganic powders (IP) used as component (a) are preferably from 0.1 to 80 $\mu$m, particularly preferably from 0.5 to 50 $\mu$m, more preferably from 0.1 to 30 $\mu$m, measured by laser diffraction.

In connection with the above mentioned definitions of, for example, POM copolymers in connection with component (b1) and/or further polymers (FP), it is also referred to the respective definitions of WO 2016/012486.

In case the respective granulate comprises a granulate based on a core material coatable with a layer of a shell material, the respective core-shell material is known to a person skilled in the art; for example, within WO 2017/009190 or PCT/EP 2019/054604 suitable core-shell materials are disclosed. However, within the context of the two aforementioned documents, the respective core-shell material is disclosed in form of filaments. A person skilled in the art knows that such filaments are usually obtained from the respective granulates. By consequence, a person skilled in the art knows how to modify the filaments as such disclosed within the two aforementioned documents and/or to modify the respective method for producing such filaments in order to obtain a core-shell granulate material which can be employed within the context of the present invention.

Examples for suitable thermoplastic polymers which can be used as at least one thermoplastic polymer (TP1) within a granulate based on core-shell material or within any other granulate according to the present invention comprising thermoplastic polymers are at least one thermoplastic polymer selected from the group consisting of impact-modified vinylaromatic copolymers, thermoplastic elastomers based on styrene (S-TPE), polyolefins (PO), aliphatic-aromatic

copolyesters, polycarbonates, thermoplastic polyurethanes (TPU), polyamides (PA), polyphenylene sulfides (PPS), polyaryletherketones (PAEK), polysulfones and polyimides (PI), more preferably from impact-modified vinylaromatic copolymers, polyolefins (PO), aliphatic-aromatic copolyesters and polyamides (PA).

In case the respective granulate contains at least one thermoplastic polyurethane, any thermoplastic polyurethane known to a person skilled in the art can be employed. More preferably, the respective at least one granulate is entirely made of at least one thermoplastic polyurethane. Thermoplastic polyurethanes as such are known to a person skilled in the art and are disclosed, for example, within WO 2016/184771 or as a filament in one embodiment of PCT/EP 2019/054604.

Preferably, the at least one thermoplastic polyurethane is obtainable by polymerization of the following components:

(a) one or more organic diisocyanates,
(b) one or more compounds reactive toward isocyanate,
(c) one or more chain extenders, preferably having a molecular weight of from 60 g/mol to 499 g/mol, and
(d) optionally at least one catalyst, and/or
(e) optionally at least one auxiliary, and/or
(f) optionally at least one additive.

A suitable thermoplastic polyurethane for example has a number average molecular weight in the range of from 8*104 g/mol to 1.8*105 g/mol, more preferably in the range of from 1.0*105 g/mol to 1.5*105 g/mol.

The components (a), (b), (c) and optional components (d), (e) and (f) are generally known from the state of the art and are described by way of example in the following.

Suitable organic diisocyanates (a) are customary aliphatic, cycloaliphatic, araliphatic and/or aromatic isocyanates. Examples thereof include but are not limited to trimethylene diisocyanate, tetramethylene diisocyanate, pentamethylene diisocyanate, hexamethylene diisocyanate, heptamethylene diisocyanate and/or octamethylene diisocyanate, 2-methylpentamethylene 1,5-diisocyanate, butylenes 1,4-diisocyanate, 2-ethylbutylene 1,4-diisocyanate, pentamethylene 1,5-diisocyanate, 1-iso-cyanato-3,3,5-trimethyl-5-isocyanatomethylcyclohexane (isophorone diisocyanate, IPDI), 1,4- and/or 1,3-bis(isocyanatomethyl)cyclohexane (HXDI), cyclohexane 1,4-diisocyanate, 1-methylcyclohexane 2,4-and/or 2,6-diisocyanate, dicyclohexylmethane 4,4'-, 2,4'-and/or 2,2'-diisocyanate (H12MDI), diphenylmethane 2,2'-, 2,4'-and/or 4,4'-diisocyanate (MDI), naphthylene 1,5-diisocyanate (NDI), tolylene 2,4- and/or 2,6-diisocyanate (TDI), diphenylmethane diisocyanate, 3,3'-dimethyldiphenyl diisocyanate, 1,2-diphenylethane diisocyanate, phenylene diisocyanate, and any combination thereof.

Suitable organic diisocyanates are also 2,4-paraphenylenediisocynate (PPDI) and 2,4-tetramethylenexylenediisocyante (TMXDI).

Diphenylmethane 2,2'-, 2,4'- and/or 4,4'-diisocyanate (MDI), and dicyclohexylmethane 4,4'-, 2,4'-and/or 2,2'-diisocyanate (H12MDI) are preferred. Diphenylmethane 2,2'-, 2,4'-and/or 4,4'-diisocyanate are particularly preferred.

It is also possible that the organic diisocyanate (a) is an isocyanate mixture comprising at least 90% by weight, more preferably at least 95% by weight, further preferably at least 98% by weight 4,4'-diphenylmethane diisocyanates (4,4'-MDI), and the remaining is other diisocyanates.

Generally, the isocyanate is either used as a single isocyanate or a mixture of isocyanates.

Generally, any suitable known component (b) can be used in the context of the present invention. The compounds (b) which are reactive toward isocyanate are preferably polyhydric alcohols, polyesterols (i.e. polyester polyols), polyetherols (i.e. polyether polyols), and/or polycarbonate diols, for which the collective term"polyols" is also usually used. The number average molecular weights (Mn) of these polyols are from 0.5 kg/mol to 8 kg/mol, preferably from 0.6 kg/mol to 5 kg/mol, very preferably from 0.8 kg/mol to 3 kg/mol, in particular 1 kg/mol to 2 kg/mol.

These polyols in addition preferably have only primary hydroxy groups. The polyols are particularly preferably linear hydroxyl-terminated polyols. Owing to the method of production, these polyols often comprise small amounts of nonlinear compounds. They are therefore frequently also referred to as "essentially linear polyols".

The polyol is either used as a single polyol or a mixture of polyols. In another preferred embodiment, the polyol is a mixture of two or more polyols. In one preferred embodiment, it is a mixture of polyester polyols and other polyols such as polyester polyols, polyether polyols and/or polycarbonate diols as compounds (b). Polyester polyols, and a mixture of one or more polyether polyols are particularly preferred.

In case of a mixture of polyols, at least one polyester polyol is used in an amount of more than 40 % by weight, preferably more than 60 % by weight, more preferably more than 80% by weight, and most preferably more than 90% by weight, based on the total weight of the mixture.

Polyether diols, polyester diols and polycarbonate diols in the invention are those commonly known and frequently used in preparation of thermoplastic polyurethanes.

The polyester diols can be based on dicarboxylic acids having from 2 to 12 carbon atoms, preferably from 4 to

8 carbon atoms, which are generally known for the preparation of polyester diols and polyhydric alcohols.

Examples of polyhydric alcohols are alkanediols having from 2 to 10, preferably from 2 to 6, carbon atoms, e.g. ethanediol, 1,3-propanediol, 1,4-butanediol, 1,5-pentanediol, 1,6-hexanediol, 1,10-decanediol, 2,2-dimethyl-1,3-propanediol, 2-methyl-1,3-propanediol, 1,2-propanediol, 3-methyl-1,5-pentanediol, and dialkylene ether glycols such as diethylene glycol and dipropylene glycol. Another examples of polyhydric alcohols are 2,2-Bis(hydroxymethyl)1,3-propanediol and trimethylolpropane. Depending on the desired properties, the polyhydric alcohols can be used either alone or, if appropriate, in mixtures with one another. To keep the glass transition temperature Tg of the polyol very low, it can be advantageous to use a polyester diol based on branched diols, particularly preferably based on 3-methyl-1,5-pentanediol and 2-methyl-1,3-propandiol. The polyester diol is particularly preferably based on at least two different diols, i.e. polyester diols which are prepared by condensation of dicarboxylic acids with a mixture of at least two different diols. In case of a mixture of diols of which at least one is a branched diol, e.g. 2-methyl-1,3-propane diol, the amount of branched diols is more than 40 % by weight, preferably more than 70 % by weight, more preferably more than 90 % by weight, based on the total weight of the diols mixture.

Preferred dicarboxylic acids are, for example: aliphatic dicarboxylic acids, such as succinic acid, glutaric acid, suberic acid, azelaic acid, sebacic acid and preferably adipic acid and aromatic dicarboxylic acids such as phthalic acid, isophthalic acid and terephthalic acid. The dicarboxylic acids can be used individually or as mixtures, e.g. in the form of a mixture of succinic acid, glutaric acid and adipic acid. Mixtures of aromatic and aliphatic dicarboxylic acids can likewise be used. To prepare the polyesterols, it may be advantageous to use the corresponding dicarboxylic acid derivatives such as dicarboxylic esters having from 1 to 4 carbon atoms in the alcohol radical, dicarboxylic anhydrides or dicarboxylic acid chlorides in place of the dicarboxylic acids. The polyester diol is particularly preferably based on adipic acid. In yet another embodiment Polyester polyols based on ε-caprolactone is preferred.

Suitable polyester polyols, for example, may have a number average molecular weight (Mn) ranging from 0.5 to 3 kg/mol, preferably 0.8 kg/mol to 2.5 kg/mol, more preferably from 1 kg/mol to 2 kg/mol, and in particular 1 kg/mol.

Suitable polyether polyols can be prepared by reacting one or more alkylene oxides having from 2 to 4 carbon atoms in the alkylene radical with a starting material molecule containing two active hydrogen atoms. Typical alkylene oxides are ethylene oxide, 1,2-propylene oxide, epichlorohydrin, and 1,2- and 2,3-butylene oxide. Ethylene oxide and mixtures of 1,2-propylene oxide and ethylene oxide are preferably utilized. The alkylene oxides can be used individually, alternately in succession or as mixtures. The typical starting material molecules are, for example water, amino alcohols such as N-alkyldiethanolamines, and diols, ethyleneglycol, 1,3-propyleneglycol, 1,4-butanediol and 1,6-hexanediol. It is also possible to use mixtures of starting material molecules. Suitable polyether polyols also include hydroxyl group-containing polymerization products of tetrahydrofuran.

Preferably used are hydroxyl group-containing polytetrahydrofuran, and co-polyether polyols of 1 ,2-proplyene oxide and ethylene oxide in which more than 50 percent of the hydroxyl groups are primary hydroxyl groups, preferably from 60 to 80 percent, and in which at least part of the ethylene oxide is a block in terminal position.

Most preferred polyether polyol is hydroxyl group-containing polytetrahydrofuran having a number average molecular weight in the range from 0.6 to 3 kg/mol, preferably from 0.8 to 2.5 kg/mol, more preferably from 1 kg/mol to 2 kg/mol.

A preferred polyol is a mixture of at least one polyester polyol and at least one polyether polyol.

Examples of polyether polyols include but are not limited to those based on generally known starting materials and customary alkylene oxides.

The polyols which can be used in the context of the present invention can either react with isocyanates to produce isocyanate prepolymer or react with isocyanate prepolymers to produce thermoplastic polyurethanes.

Suitable polyols used for reacting with isocyanates to produce an isocyanate prepolymer may have an average functionality > 2, preferably between 2.1 and 3, more preferably between 2.1 and 2.7, and most preferably between 2.2 and 2.5. Furthermore, suitable polyols used for reacting with isocyanate prepolymers to produce TPU preferably have an average functionality of from 1.8 to 2.3, preferably from 1.9 to 2.2, in particular 2. The term "functionality" means the number of groups which react with isocyanate under condition of polymerization.

As chain extenders (c), generally known aliphatic, araliphatic, aromatic and/or cycloaliphatic compounds having a molecular weight of from 60 g/mol to 499 g/mol, preferably from 60 g/mol to 400 g/mol can be used, more preferably bifunctional compounds, for example diamines and/or alkane diols having from 2 to 10 carbon atoms in the alkylene radical, in particular 1,2-ethylene diol, 1,4-butanediol, 1,6-hexanediol, 1,3-propanediol, and/or dialkylene-, trialkylene-, tetraalkylene-, pentaalkylene-, hexaalkylene-, heptaalkylene-, octaalkylene-, nonaalkylene- and/or decaalkylene-glycols having from 2 to 8 carbon atoms in alkylene moiety, preferably corresponding oliogopropyleneglycols and/or polypropyleneglycols. It is also possible to use mixtures of the chain extenders. Preference is given to 1,4-butanediol, 1,2-ethylenediol, 1,6-hexanediol or combination thereof as chain extender.

In a preferred embodiment, chain extender (c) is used in an amount of from 2% to 20% by weight, preferably from 5% to 15% by weight, based on the total weight of components (a), (b) and (c).

As chain extender either a single chain extender or a mixture of chain extenders is used.

Suitable catalysts (d), which, in particular, accelerate the reaction between NCO groups of the organic diisocyanates (a) and the polyols (b) and component (c) are tertiary amines which are known and customary in the prior art, for example, triethylamine, dimethylcyclohexylamine, N-methylmorpholine, 2-(dimethyl-aminoethoxy)ethanol, N,N'-dimethylpiperazine, diazabicyclo[2.2.2]octane and the like, and also, in particular, organic metal compounds such as titanic esters, bismuth carboxylic esters, zinc esters, iron compounds such as iron (III) acetylacetonate, tin compounds, e.g. tin diacetate, tin dioctoate, tin dilaurate or dialkyl tin salts of aliphatic carboxylic acids, e.g. dibutyltin diacetate, dibutyltin dilaurate or the like. In bismuth salts oxidation state of the bismuth is preferably 2 or 3, more preferably 3.

Preferred carboxylic acids of bismuth carboxylic esters have 6 to 14 carbon atoms, more preferred 8 to 12 carbon atoms. Preferred examples of bismuth salts are bismut(III)-neodecanoat, bismut-2-etyhlhexanoat and bismut-octanoat.

The catalysts, if used, are usually used in amounts of from 0.0001 to 0.1 parts by weight per 100 parts by weight of polyols (b). Preference is given to tin catalysts, in particular tin dioctoate.

Apart from catalysts (d), customary auxiliaries (e) and/or additives (f) can be added, if desired, in addition to components (a) to (c).

As auxiliaries (e), for example surface-active substances, flame retardants, nucleating agents, lubricant wax, dyes, pigments, and stabilizers, e.g. against oxidation, hydrolysis, light, heat or discoloration may be used, and as additives (f), for example inorganic and/or organic fillers and reinforcing materials. As hydrolysis inhibitors, preference is given to oligomeric and/or polymeric aliphatic or aromatic carbodiimides. To stabilize thermoplastic polyurethanes against aging, stabilizers can also be added.

Further details regarding optional auxiliaries and additives may be found in the specialist literature, e.g. in Plastics Additive Handbook, 5th edition, H. Zweifel, ed, Hanser Publishers, Munich, 2001.

Besides the stated components a), b), and c) and, if appropriate, d) and e) it is also possible to use chain regulators, usually having a number average molecular weight of 31 g/mol to 3 kg/mol. These chain regulators are compounds which have only one isocyanate-reactive functional group, such as monofunctional alcohols, monofunctional amines and/or monofunctional polyols, for example. Chain regulators of this kind allow a precise rheology to be set, particularly in the case of TPUs. Chain regulators can be used generally in an amount of 0 to 5, preferably 0.1 to 1, part(s) by weight, based on 100 parts by weight of component b), and in terms of definition are included in component (c).

To adjust the hardness of the thermoplastic polyurethane, component (b) which is reactive toward isocyanates and chain extenders (c) can be varied within a relatively wide range of molar ratios. Molar ratios of component (b) to the total of chain extenders (c) to be used from 10:1 to 1:10, in particular from 1:1 to 1:4, have been found to be useful, with hardness of the thermoplastic polyurethane increasing with increasing content of (c).

Suitable thermoplastic polyurethanes preferably have a Shore A hardness of generally less than Shore A 98 in accordance with DIN 53505, more preferred from 60 Shore A to 98 Shore A, even more preferred from 70 Shore A to 95 Shore A, and most preferred from 75 Shore A to 90 Shore A.

Preferably, a thermoplastic polyurethane suitable in the context of the present invention has a density in a range from 1.0 g/cm3 to 1.3 g/cm3. The tensile strength of the thermoplastic polyurethane in accordance with DIN 53504 is more than 10 MPa, preferably more than 15 MPa, particularly preferably more than 20 MPa. The thermoplastic polyurethane suitable in the context of the present invention has an abrasion loss in accordance with DIN 53516 of generally less than 150 $mm^3$, preferably less than 100 $mm^3$.

In general, thermoplastic polyurethanes are prepared by reacting (a) isocyanates with (b) compounds reactive toward isocyanates, usually having a number average molecular weight (Mn) of from 0.5 kg/mol to 10 kg/mol, preferably from 0.5 kg/mol to 5 kg/mol, particularly preferably from 0.8 kg/mol to 3 kg/mol, and (c) chain extenders having a number average molecular weight (Mn) of from 0.05 kg/mol to 0.499 kg/mol, if appropriate in the presence of (d) catalysts and/or (e) conventional additives.

The thermoplastic polyurethane may be produced by two different kinds of processes, namely "one-step" processes and "two-step" process which are known from the state of the art.

According to step (ii), to the molten thermoplastic polyurethane, the isocyanate prepolymer composition is added and the resulting mixture is mixed to form a melt. Suitable isocyanate prepolymers are described in the following by way of example.

In such a process, the isocyanate prepolymer composition preferably is heated and used at temperature above 20°C to have better flowability, the temperature of the isocyanate prepolymer composition preferably is lower than 80°C to avoid undesired reactions, e.g. allophante cross linking.

For the purpose of the present invention, the term "isocyanate prepolymer" refers to the reaction product of isocyanates with compounds which are reactive toward isocyanates and have a number average molecular weight in the range from 0.5 kg/mol to 10 kg/mol, preferably from 1 kg/mol to 5 kg/mol. Isocyanate prepolymers are intermediates of the isocyanate polyaddition reaction. In a preferred embodiment the prepolymer has a glass transition temperature Tg below -15°C and a melting temperature below 70°C measured by means of DSC in accordance with DIN EN ISO 11357-1.

Suitable isocyanate prepolymers may have preferably a NCO content of from 4 to 27 parts by weight based on the weight of the isocyanate prepolymer. Suitable isocyanate prepolymer according to the invention may be used in the form of a single isocyanate prepolymer or a mixture of isocyanate prepolymers.

Most preferred, the isocyanate prepolymer is the reaction product between diphenylmethane 4,4'-diisocyanate, and/or diphenylmethane 2,2'-diisocyanate, and/or diphenylmethane 2,4'-diisocyanate (MDI) and a polyester polyol based on adipic acid, 2-methyl-1,3-propanediol and 1,4-butanediol, wherein the mole ratio of said polyester polyols to said diisocyanates is 1:1 to 1:5, preferably 1:1.2 to 1:3, more preferably 1:1.5 to 1:2.5, such as 1:2.

In the context of the present invention, the isocyanate prepolymer has an average isocyanate functionality (Fn) of 2 or more than 2, preferably between 2 and 3, more preferably between 2 and 2.7, most preferably between 2 and 2.5.

Additionally, plasticizers can be used in the process for preparing a granulate based on thermoplastic polyurethane. Suitable plasticizers are generally known from the state of the art, for example from David F. Cadogan and Christopher J. Howick "Plasticizers" in Ullmann's Encyclopedia of Industrial Chemistry 2000, Wiley-VCH, Weinheim.

Suitable plasticizers are C3-15, preferably C3-10, polycarboxylic acids and their esters with linear or branched C2-30, aliphatic alcohols, benzoates, epoxidized vegetable oils, sulfonamides, organophosphates, glycols and its derivatives, and polyethers. Preferred plasticizers are sebacic acid, sebacates, adipic acid, adipates, glutaric acid, glutarates, phthalic acid, phthalates (for example with C8 alcohols), azelaic acid, azelates, maleic acid, maleate, citric acid and its derivatives, see for example WO 2010/125009. The plasticizers may be used in combination or individually.

Further additives (as optional component f)) such as for example a polymethylene polyphenyl polyisocyanate may be added in the process for preparing a granulate based on thermoplastic polyurethane.

For the purpose of the embodiment of the present invention in connection with TPU, the term "further additives" refers to any substance that will be added to the reaction system of said thermoplastic polyurethane, said isocyanate prepolymer and said plasticizer, but not include the said thermoplastic polyurethane, said isocyanate prepolymer and said plasticizer. Usually such substances include the auxiliaries and additives commonly used in this art.

Within the above mentioned embodiment, it is preferred that

i) the one or more organic diisocyanates (component a)) are selected from diphenylmethane 2,2'-, 2,4'- and/or 4,4'-diisocyanate (MDI), and dicyclohexylmethane 4,4'-, 2,4'-and/or 2,2'-diisocyanate (H12MDI), and/or

ii) the one or more compound reactive toward isocyanate (component b)) are selected from polyhydric alcohols, polyesterols, polyetherols and/or polycarbonate diols, and/or

iii) the one and more chain extenders (compound c)) are selected from 1,4-butanediol, 1,2-ethylenediol and 1,6-hexanediol.

The granulate employed within step a) of the process of the present invention may be provided or supplied in any suitable item, such as a (storage) container known to a person skilled in the art. The respective granulate to be employed within step a) may be placed completely or partially inside or outside of (the housing of) the 3D extrusion printer to be employed. If the size of the respective container is rather big, such a container may be at least partially positioned outside of the housing of a 3D extrusion printer. However, it is preferred that the at least one granulate employed in step a) is placed in at least one storage container which may be positioned partially or completely inside of the three-dimensional (3D) extrusion printer.

Step b) of the process of the present invention is carried out by feeding the at least one granulate with at least one screw located at least partially inside the housing of a three-dimensional (3D) extrusion printer towards at least one nozzle of the 3D extrusion printer.

As mentioned above, 3D extrusion printers as such to be employed within the inventive process are known to a person skilled in the art. However, it is preferred that the 3D extrusion printer comprises at least one screw and at least one nozzle and the screw feeds the at least one granulate in vertical direction or in an angle of not more than 60°, preferably of not more than 45°, different to the vertical direction towards the nozzle, more preferably the screw feeds the at least one granulate in vertical direction towards the nozzle.

It is also preferred that the housing of the 3D extrusion printer comprises at least one inlet for feeding the granulate into the housing, at least one screw for transporting the granulate from the storage container to the nozzle, at least one heating element and at least one nozzle, preferably the at least one nozzle, the at least one heating element and at least a part of the at least one screw are positioned within at least one printing head of the housing of the 3D extrusion printer.

It is also preferred that the at least one screw employed within step b) is a heatable screw.

It is even more preferred that the 3D extrusion printer employed within the present invention is a mini extrusion printer or comprises a mini extrusion unit and/or has a rather small length to diameter ratio of the screw contained within the respective printer. Preferably, the length to diameter ratio of the at least one screw employed in step b) is below 12,

preferably below 8. Examples of rather short screws are in the range of the length of the respective screw of not more than 150 mm.

It is also preferred within the context of the present invention that the at least one granulate is transferred by gravity from the at least one storage container to the at least one screw, preferably the at least one storage container is positioned on the upper end of the at least one screw and the at least one storage container has an opening on its lower part in order to transfer the at least one granulate from the at least one storage container to the at least one screw.

Step c) of the process of the present invention is carried out by heating the at least one granulate inside the housing of the 3D extrusion printer. The employed temperature within step c) is high enough to at least partially melt the at least one granulate.

A person skilled in the art knows to which temperature the respective granulate or mixtures of two or more granulates has to be heated in order to carry out step c) of the process of the present invention, since the specific heating temperature depends on the nature of the granulate to be employed. A person skilled in the art knows how to determine the respective melting point of an individual granulate.

In case the granulate contains organic polymers, the temperature to be chosen within step c) of the process of the present invention is usually in the range of the melting point of at least one of the polymers contained within the respective granulate. "In the range of the melting point" means that the temperature to be chosen is usually at least 1°C, preferably at least 5°C and more preferably at least 10°C above the individual melting point of at least one polymer contained within the respective granulate. The person skilled in the art also knows that the temperature to be employed within step c) has to be as high as required to perform an extrusion with the respective granulate employed.

The heating device employed within step c) of the process according to the present invention is known to a person skilled in the art. The heating device is usually directly connected with the nozzle of the respective 3D extrusion printer. However, the heating device on the one hand and the nozzle on the other hand are usually two devices operated independently from each other. For example, the temperature of the heating device may be the same as the temperature of the nozzle, however, the temperature of the heating device may also be lower than the respective temperature of the nozzle. The temperature of the heating device is usually as high as it is required to keep the respective granulate/polymer in a flowable condition.

It is preferred that the heating of the at least one granulate is carried out within at least one printing head of the 3D extrusion printer and the at least one printing head contains at least a part of the at least one screw employed within step b) and at least one nozzle.

Step d) of the process according to the present invention is carried out by extruding the at least one heated granulate obtained in step c) through the nozzle of the printing head of the 3D extrusion printer in order to obtain at least one extruded strand.

Step e) of the process of the present invention is carried out by forming the 3D object layer by layer from the at least one extruded strand obtained in step d).

Steps d) and e) according to the present invention as such are known to a person skilled in the art. Any conventional 3D extrusion printer, including bowden printers, can be employed within the inventive process. Such conventional 3D extrusion printers usually contain printing heads including nozzles which are known to a person skilled in the art. Due to the extrusion of the respective heated granulate obtained in step c), a respective extruded strand of the employed granulate is obtained within step d). For example, if the extrusion according to step d) is interrupted for a certain period of time, the employed granulate may be replaced by a different granulate and the extrusion is continued afterwards. By consequence, a new type of extruded strand may be obtained since the respective granulates may differ in respect of the respective chemical compositions before and after the break. This can be done in order to provide 3D objects having different individual chemical compositions within the respective layers built up step by step (layer by layer) according to step e) of the process of the present invention.

The forming of the 3D object according to step e) in a layer-by-layer mood is known to a person skilled in the art. Usually, the respective printer, in particular the printing head including the nozzle, may be moved either in z-direction and/or in x- or y-direction in order to obtain the respective 3D object step by step. Usually, the 3D object as such is placed on a plate which may be moved in z-direction and/or in x- or y-direction. For the sake of completeness, it is indicated that the x-, y- and z-directions are in relation to a Cartesian coordinate system.

In a preferred embodiment of the present invention, the 3D object obtained in step e) is a three-dimensional (3D) green body. A 3D green body is usually obtained in case a granulate is employed within the inventive process, containing at least one inorganic powder and optionally at least fibrous filler. Such granulate may additionally contain (as an optional component) polymeric material such as a thermoplastic polymer. Preferably, a 3D green body is obtained within the context of the present invention in case granulates based on the above defined mixture (M) are employed and/or granulates based on inorganic powders as disclosed in WO 2016/012486.

In case a 3D green body is obtained within the process of the present invention, it is also preferred that step e) is followed by a step f), in which at least part of the binder (B) is removed from the three-dimensional green body to form a three-dimensional (3D) brown body.

It is also preferred that step f) is followed by step g), in which the three-dimensional (3D) brown body is sintered to form a three-dimensional (3D) sintered body.

The above mentioned steps for transferring a 3D green body into a 3D brown body and, optionally, further into a 3D sintered body, are known to a person skilled in the art. Such techniques are disclosed, for example, within WO 2017/009190 and/or WO 2016/012486.

Another subject-matter of the present disclosure, that is not claimed, is, by consequence, a three-dimensional (3D) object as such, prepared by the process according to the present invention as described above. Preferably, such a 3D object is a 3D green body as such.

Another subject-matter of the present present disclosure, that is not claimed, is also a three-dimensional (3D) brown body as such, prepared by the inventive process, wherein step e) is followed by step f).

Another subject-matter of the present present disclosure, that is not claimed, is a three-dimensional (3D) sintered body as such, prepared by the process of the present invention, wherein step e) is followed by step f) and step f) in turn is followed by step g).

The invention is explained in more detail below by examples, but is not restricted thereto.

## Examples

Inventive example **E1** and Comparative examples **C2** and **C3**

*Provision of the at least one granulate (Step a))*

*Production of the granulate*

Catamold evo 316L pellets having a pellet size of 2 to 4 mm (**C3**) are grinded with a cutting mill to obtain a fine granulate. After grinding, the fine granulate is fractionated by sieving to obtain different fractions (0.5 to 1 mm (**E1**); 1 to 2 mm (**C2**)).

The Catamold evo 316L pellets comprise stainless steel 316L particles, polyoxymethylene (POM) as primary binder and polyethylene (PE) as secondary binder.

*Production of the three-dimensional object by employing a three-dimensional printing process (steps b) to e))*

A series P printer from the 3D printer manufacturer Pollen AM is used as three-dimensional (3D) extrusion printer. The delta kinematic-type printer processes pellets or fine granulates; the print bed and printer space can be heated. Hardened steel nozzles are employed to minimize abrasion. To ensure a good adhesion to the build plate during printing and easy removal of parts after the print, a EZ-STIK HOT build plate from Geckotech is used.

Typical printing parameters are shown in table 1.

Table 1

| | |
|---|---|
| **Nozzle temperature [°C]** | 210- 240 |
| **Build plate temperature [°C]** | 80 - 120 |
| **IR radiative heater [°C]** | 0-240 |
| **Extruder temperature [°C]** | 160- 180 |
| **Layer height [mm]** | 0.1 - 0.2 |
| **Nozzle diameter [mm]** | 0.4 - 0.8 |
| **Print speed [mm/min]** | 900 - 2400 |

The different fractions of the fine granulate are each fed with a screw located at least partially inside the housing of the three-dimensional (3D) extrusion printer towards the nozzles of the 3D extrusion printer (step b)), and then heated inside the housing of the 3D extrusion printer (step c)). Subsequently, the heated fractions of the fine granulate obtained in step c) are each extruded through the nozzles in order to obtain at least one extruded strand (step d)), and from the at least one extruded strand, a 3D object (a three-dimensional (3D) green body) is formed layer by layer (step e)).

In figure 1, the 3D objects formed are shown. The 3D object a) is formed from the fraction having a particle size in the range of 0.5 to 1 mm (E1), the 3D object b) is formed from the fraction having a particle size in the range of 1 to 2 mm (C2) and the 3D object c) is formed from the pellets (C3).

As can be seen from figure 1, the fine granulate having a particle size in the range of 0.5 to 1 mm (**E1**) leads to a constant extrusion rate, printing line consistency and, therefore, to the smoothest surface. The larger the particle sizes are the more prominent is the layer appearance due to extrusion rate instabilities.

*Preparation of brown and sintered bodies*

*Step f)*

After step e), at least part of the binder (B) is removed from the three-dimensional green body to form a three-dimensional (3D) brown body:

The debinding is done at 110 °C using $HNO_3$ (> 98 %) in a 40 litre debinding furnace (Nabertherm CDB 40) with a nitric acid feed of typically 60 ml/h and a purging gas (nitrogen) throughput of 840 l/h.

The debinding process is finished when a minimal debinding loss of 5.7 % is reached.

*Step g)*

After step f), the three-dimensional (3D) brown body is sintered to form a three-dimensional (3D) sintered body: The sintering is done in an atmosphere with 100 % clean and dry hydrogen (dewpoint < - 40 °C). As sintering support $Al_2O_3$ with a purity of 99.6 % is used. The following sintering cycle is used:

1) room temperature - 5 K/min - 600 °C, hold 1 h,
2) 600 °C - 5 K/min - 1380 °C, hold 3 h
3) furnace cooling

In the early stage of the sintering process remaining binder constituents are burnt off and the pyrolysis products is removed by a suction fan.

## Claims

1. A process for producing a three-dimensional (3D) object by employing a three-dimensional (3D) printing process comprising the steps a) to e) as follows:

   a) providing at least one granulate having a particle size in the range of 0.2 to 1 mm,
   b) feeding the at least one granulate with at least one screw located at least partially inside the housing of a three-dimensional (3D) extrusion printer towards at least one nozzle of the 3D extrusion printer,
   c) heating the at least one granulate inside the housing of the 3D extrusion printer,
   d) extruding the at least one heated granulate obtained in step c) through the at least one nozzle in order to obtain at least one extruded strand,
   e) forming the 3D object layer by layer from the at least one extruded strand obtained in step d),

   wherein the at least one granulate is selected from a granulate comprising at least one inorganic powder and at least one polymer.

2. The process according to claim 1, wherein the 3D extrusion printer comprises at least one screw and at least one nozzle and the screw feeds the at least one granulate in vertical direction or in an angle of not more than 60°, preferably of not more than 45°, different to the vertical direction towards the nozzle, more preferably the screw feeds the at least one granulate in vertical direction towards the nozzle.

3. The process according to claim 1 or 2, wherein

   i) the at least one granulate employed in step a) is placed in at least one storage container which may be positioned partially or completely inside of the three-dimensional (3D) extrusion printer, and/or
   ii) the housing of the 3D extrusion printer comprises at least one inlet for feeding the granulate into the housing, at least one screw for transporting the granulate from the storage container to the nozzle, at least one heating element and at least one nozzle, preferably the at least one nozzle, the at least one heating element and at

least a part of the at least one screw are positioned within at least one printing head of the housing of the 3D extrusion printer, and/or
iii) the heating of the at least one granulate according to step c) is carried out within at least one printing head of the 3D extrusion printer and the at least one printing head contains at least a part of the at least one screw employed within step b) and at least one nozzle, and/or
iv) the at least one screw employed within step b) is a heatable screw.

**4.** The process according to any of claims 1 to 3, wherein the at least one granulate is further selected from

i) a granulate comprising at least one polymer, comprising at least one thermoplastic polymer,
ii) a granulate comprising at least one inorganic powder and at least one polymer, the inorganic powder is a powder of at least one inorganic material selected from the group consisting of a metal, a metal alloy and a ceramic material,
iii) a granulate comprising at least one core material (CM) coated with a layer of at least one shell material (SM),
iv) a granulate comprising at least one fibrous filler (FF) and at least one polymer, preferably the fibrous filler (FF) is at least one carbon fiber, or
v) a granulate comprising at least one thermoplastic polyurethane.

**5.** The process according to any of claims 1 to 4, wherein the at least one granulate is a mixture (M) comprising

(a) from 40 to 75% by volume of an inorganic powder (IP) based on the total volume of the mixture (M),
(b) from 25 to 60% by volume based on the total volume of the mixture (M) of a binder (B) comprising

(b1) from 50 to 98% by weight of at least one polyoxymethylene (POM) based on the total weight of the binder (B),
(b2) from 2 to 35% by weight of at least one polyolefin (PO) based on the total weight of the binder (B),
(b3) from 0 to 40% by weight of at least one further polymer (FP) based on the total weight of the binder (B).

**6.** The process according to claim 5, wherein

i) the mixture (M) comprises as component (c) from 0.1 to 5% by volume of at least one dispersant based on the total volume of the mixture (M), and/or
ii) the inorganic powder (IP) is a powder of at least one inorganic material selected from the group consisting of a metal, a metal alloy and a ceramic material, and/or
iii) component (b1) is a polyoxymethylene (POM) copolymer which is prepared by polymerization of

- from at least 50 mol-% of a formaldehyde source (b1a),
- from 0.01 to 20 mol-% of at least one first comonomer (b1b) of the general formula (II)

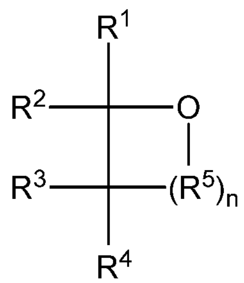

(II),

wherein

$R^1$ to $R^4$ are each independently of one another selected from the group consisting of H, $C_1$-$C_4$-alkyl and halogen-substituted $C_1$-$C_4$-alkyl;
$R^5$ is selected from the group consisting of a chemical bond, a ($-CR^{5a}R^{5b}-$) group and a ($-CR^{5a}R^{5b}O-$) group,

wherein

$R^{5a}$ and $R^{5b}$ are each independently of one another selected from the group consisting of H and unsubstituted or at least monosubstituted $C_1$-$C_4$-alkyl,

wherein the substituents are selected from the group consisting of F, Cl, Br, OH and $C_1$-$C_4$-alkyl;

n is 0, 1, 2 or 3;

and
- from 0 to 20 mol-% of at least one second comonomer (b1c) selected from the group consisting of a compound of formula (III) and a compound of formula (IV)

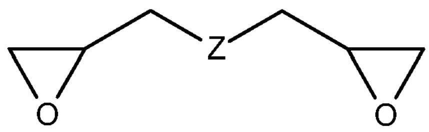

(III),

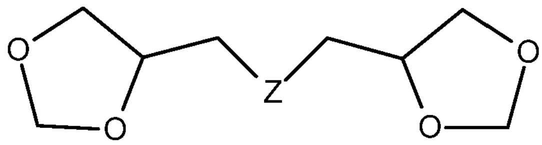

(IV),

wherein

Z is selected from the group consisting of a chemical bond, an (-O-) group and an (-O-$R^6$-O-) group,

wherein

$R^6$ is selected from the group consisting of unsubstituted $C_1$-$C_8$-alkylene and $C_3$-$C_8$-cycloalkylene, and/or

iv) the further polymer (FP) is at least one further polymer (FP) selected from the group consisting of a polyether, a polyurethane, a polyepoxide, a polyamide, a vinyl aromatic polymer, a poly(vinyl ester), a poly(vinyl ether), a poly(alkyl (meth)acrylate) and copolymers thereof.

**7.** The process according to any of claims 1 to 6, wherein the granulate employed in step a) has

i) a particle size in the range of 0.4 to 0.9 mm, and/or
ii) a round shape, wherein the term "round shape" means that more than 50% of the respective particles have a sphericity of > 0.7, wherein the sphericity is determined according to ISO 9276-6.

**8.** The process according to any of claims 1 to 7, wherein the length to diameter ratio of the at least one screw employed in step b) is below 12, preferably below 8.

**9.** The process according to any of claims 1 to 8, wherein the at least one granulate is transferred by gravity from the at least one storage container to the at least one screw, preferably the at least one storage container is positioned on the upper end of the at least one screw and the at least one storage container has an opening on its lower part in order to transfer the at least one granulate from the at least one storage container to the at least one screw.

**10.** The process according to any of claims 1 to 9, wherein the 3D object obtained in step e) is a three-dimensional (3D) green body.

**11.** The process according to claim 10, wherein step e) is followed by a step f), in which at least part of the binder (B) is removed from the three-dimensional green body to form a three-dimensional (3D) brown body.

12. The process according to claim 11, wherein step f) is followed by a step g), in which the three-dimensional (3D) brown body is sintered to form a three-dimensional (3D) sintered body.

## Patentansprüche

1. Verfahren zur Herstellung eines dreidimensionalen (3D) Objekts durch Verwenden eines dreidimensionalen (3D) Druckprozesses, umfassend die Schritte a) bis e) wie folgt:

   a) Bereitstellen von mindestens einem Granulat mit einer Partikelgröße im Bereich von 0,2 bis 1 mm,
   b) Einspeisen des mindestens einen Granulats mit mindestens einer Schnecke, die sich mindestens teilweise innerhalb des Gehäuses eines dreidimensionalen (3D) Extrusionsdruckers befindet, in Richtung von mindestens einer Düse des 3D-Extrusionsdruckers,
   c) Erwärmen des mindestens einen Granulats innerhalb des Gehäuses des 3D-Extrusionsdruckers,
   d) Extrudieren des mindestens einen erwärmten Granulats, das in Schritt c) erhalten wurde, durch die mindestens eine Düse, um mindestens einen extrudierten Strang zu erhalten,
   e) Bilden des 3D-Objekts Schicht für Schicht aus dem mindestens einen in Schritt d) erhaltenen extrudierten Strang,

   wobei das mindestens eine Granulat ausgewählt ist aus einem Granulat, das mindestens ein anorganisches Pulver und mindestens ein Polymer umfasst.

2. Verfahren nach Anspruch 1, wobei der 3D-Extrusionsdrucker mindestens eine Schnecke und mindestens eine Düse umfasst, und die Schnecke das mindestens eine Granulat in vertikaler Richtung oder in einem Winkel von nicht mehr als 60°, vorzugsweise nicht mehr als 45° zu der vertikalen Richtung in Richtung der Düse einspeist, wobei die Schnecke bevorzugter das mindestens eine Granulat in vertikaler Richtung in Richtung der Düse einspeist.

3. Verfahren nach Anspruch 1 oder 2, wobei

   i) das mindestens eine in Schritt a) verwendete Granulat in mindestens einem Vorratsbehälter platziert ist, der teilweise oder vollständig innerhalb des dreidimensionalen (3D) Extrusionsdruckers positioniert sein kann, und/oder
   ii) das Gehäuse des 3D-Extrusionsdruckers mindestens einen Einlass zum Einspeisen des Granulats in das Gehäuse, mindestens eine Schnecke zum Transportieren des Granulats aus dem Vorratsbehälter zu der Düse, mindestens ein Heizelement und mindestens eine Düse umfasst, wobei vorzugsweise die mindestens eine Düse, das mindestens eine Heizelement und mindestens ein Teil der mindestens einen Schnecke innerhalb mindestens eines Druckkopfes des Gehäuses des 3D-Extrusionsdruckers positioniert sind, und/oder
   iii) das Erwärmen des mindestens einen Granulats gemäß Schritt c) innerhalb mindestens eines Drucckopfes des 3D-Extrusionsdruckers durchgeführt wird, und der mindestens eine Druckkopf mindestens einen Teil der mindestens einen innerhalb von Schritt b) verwendeten Schnecke und mindestens eine Düse enthält, und/oder
   iv) die mindestens eine in Schritt b) verwendete Schnecke eine heizbare Schnecke ist.

4. Verfahren nach einem der Ansprüche 1 bis 3, wobei das mindestens eine Granulat weiterhin ausgewählt ist aus

   i) einem Granulat, umfassend mindestens ein Polymer, umfassend mindestens ein thermoplastisches Polymer,
   ii) einem Granulat, umfassend mindestens ein anorganisches Pulver und mindestens ein Polymer, wobei das anorganische Pulver ein Pulver aus mindestens einem anorganischen Material ausgewählt aus der Gruppe bestehend aus einem Metall, einer Metalllegierung und einem Keramikmaterial ist,
   iii) einem Granulat, umfassend mindestens ein Kernmaterial (CM), das mit einer Schicht aus mindestens einem Mantelmaterial (SM) beschichtet ist,
   iv) einem Granulat, umfassend mindestens einen faserigen Füllstoff (FF) und mindestens ein Polymer, wobei der faserige Füllstoff (FF) vorzugsweise mindestens eine Kohlefaser ist, oder
   v) einem Granulat, umfassend mindestens ein thermoplastisches Polyurethan.

5. Verfahren nach einem der Ansprüche 1 bis 4, wobei das mindestens eine Granulat eine Mischung (M) ist, umfassend

   (a) 40 bis 75 Vol.% eines anorganischen Pulvers (IP), bezogen auf das Gesamtvolumen der Mischung (M),
   (b) 25 bis 60 Vol.% eines Bindemittels (B), bezogen auf das Gesamtvolumen der Mischung (M), wobei das

Bindemittel umfasst:

(b1) 50 bis 98 Gew.% von mindestens einem Polyoxymethylen (POM), bezogen auf das Gesamtgewicht des Bindemittels (B),
(b2) 2 bis 35 Gew.% von mindestens einem Polyolefin (PO), bezogen auf das Gesamtgewicht des mindestens einen Bindemittels (B),
(b3) 0 bis 40 Gew.% von mindestens einem weiteren Polymer (FP), bezogen auf das Gesamtgewicht des Bindemittels (B).

**6.** Verfahren nach Anspruch 5, wobei

i) die Mischung (M) als Komponente (c) 0,1 bis 5 Vol.% von mindestens einem Dispergiermittel umfasst, bezogen auf das Gesamtvolumen der Mischung (M), und/oder
ii) das anorganische Pulver (IP) ein Pulver aus mindestens einem anorganischen Material ausgewählt aus der Gruppe bestehend aus einem Metall, einer Metalllegierung und einem Keramikmaterial ist, und/oder
iii) Komponente (b1) ein Polyoxymethylen (POM)-Copolymer ist, das durch Polymerisation von folgendem hergestellt ist:

- mindestens 50 Mol.% einer Formaldehydquelle (b1a),
- 0,01 bis 20 Mol.% von mindestens einem ersten Comonomer (blb) mit der allgemeinen Formel (II)

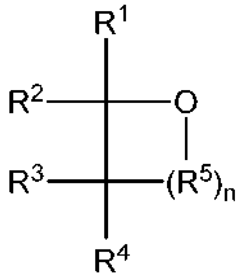

(II),

wobei

$R^1$ bis $R^4$ jeweils unabhängig voneinander ausgewählt sind aus der Gruppe bestehend aus H, $C_1$-$C_4$-Alkyl und halogensubstituiertem $C_1$-$C_4$-Alkyl;
$R^5$ ausgewählt ist aus der Gruppe bestehend aus einer chemischen Bindung, einer Gruppe ($-CR^{5a}R^{5b}-$) und einer Gruppe ($-CR^{5a}R^{5b}O-$),
wobei
$R^{5a}$ und $R^{5b}$ jeweils unabhängig voneinander ausgewählt sind aus der Gruppe bestehend aus H und unsubstituiertem oder mindestens monosubstituiertem $C_1$-$C_4$-Alkyl,
wobei die Substituenten ausgewählt sind aus der Gruppe bestehend aus F, Cl, Br, OH und $C_1$-$C_4$-Alkyl;
n gleich 0, 1, 2 oder 3 ist;

und
- 0 bis 20 Mol.% von mindestens einem zweiten Comonomer (blc) ausgewählt aus der Gruppe bestehend aus einer Verbindung der Formel (III) und einer Verbindung der Formel (IV),

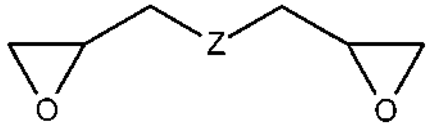

(III),

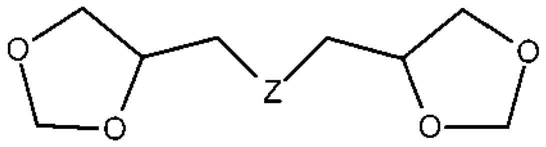

(IV),

wobei

Z ausgewählt ist aus der Gruppe bestehend aus einer chemischen Bindung, einer Gruppe (-O-) und einer Gruppe (-O-$R^6$-O-),
wobei
$R^6$ ausgewählt ist aus der Gruppe bestehend aus unsubstituiertem $C_1$-$C_8$-Alkylen und $C_3$-$C_8$-Cycloalkylen, und/oder

iv) das weitere Polymer (FP) mindestens ein weiteres Polymer (FP) ausgewählt aus der Gruppe bestehend aus einem Polyether, einem Polyurethan, einem Polyepoxid, einem Polyamid, einem vinylaromatischen Polymer, einem Poly(vinylester), einem Po-ly(vinylether), einem Poly(alkyl(meth)acrylat) und Copolymeren davon ist.

**7.** Verfahren nach einem der Ansprüche 1 bis 6, wobei das in Schritt a) verwendete Granulat

i) eine Partikelgröße im Bereich von 0,4 bis 0,9 mm hat, und/oder
ii) eine runde Form hat, wobei der Begriff "runde Form" bedeutet, dass mehr als 50 % der jeweiligen Partikel eine Sphärizität > 0,7 haben, wobei die Sphärizität gemäß ISO 9276-6 bestimmt wird.

**8.** Verfahren nach einem der Ansprüche 1 bis 7, wobei das Verhältnis von Länge zu Durchmesser der mindestens einen in Schritt b) verwendeten Schnecke unter 12, vorzugsweise unter 8 ist.

**9.** Verfahren nach einem der Ansprüche 1 bis 8, wobei das mindestens eine Granulat mittels Schwerkraft aus dem mindestens einen Vorratsbehälter zu der mindestens einen Schnecke transferiert wird, wobei der mindestens eine Vorratsbehälter vorzugsweise auf dem oberen Ende der mindestens einen Schnecke positioniert ist, und der mindestens eine Vorratsbehälter auf seinem unteren Teil eine Öffnung aufweist, um das mindestens eine Granulat aus dem mindestens einen Vorratsbehälter zu der mindestens einen Schnecke zu transferieren.

**10.** Verfahren nach einem der Ansprüche 1 bis 9, wobei das in Schritt e) erhaltene 3D-Objekt ein dreidimensionaler (3D) Grünkörper ist.

**11.** Verfahren nach Anspruch 10, wobei Schritt e) von Schritt f) gefolgt wird, in dem mindestens ein Teil des Bindemittels (B) aus dem dreidimensionalen Grünkörper entfernt wird, um einen dreidimensionalen (3D) Braunkörper zu bilden.

**12.** Verfahren nach Anspruch 11, wobei Schritt f) von einem Schritt g) gefolgt wird, in dem der dreidimensionale (3D) Braunkörper gesintert wird, um einen dreidimensionalen (3D) gesinterten Körper zu bilden.

## Revendications

**1.** Procédé pour la production d’un objet tridimensionnel (3D) en employant un procédé d’impression tridimensionnelle (3D) comprenant les étapes a) à e) comme suit :

a) fourniture d’au moins un granulat ayant une taille de particule dans la plage de 0,2 à 1 mm,
b) alimentation de l’au moins un granulat avec au moins une vis située au moins partiellement à l’intérieur du boîtier d’une imprimante à extrusion tridimensionnelle (3D) vers au moins une buse de l’imprimante à extrusion 3D,
c) chauffage de l’au moins un granulat à l’intérieur du boîtier de l’imprimante à extrusion 3D,
d) extrusion de l’au moins un granulat chauffé obtenu dans l’étape c) à travers l’au moins une buse afin d’obtenir au moins un brin extrudé,
e) formation de l’objet 3D couche par couche à partir de l’au moins un brin extrudé obtenu dans l’étape d),

l'au moins un granulat étant choisi parmi un granulat comprenant au moins une poudre inorganique et au moins un polymère.

**2.** Procédé selon la revendication 1, l'imprimante à extrusion 3D comprenant au moins une vis et au moins une buse et la vis alimentant l'au moins un granulat en direction verticale ou en un angle de pas plus de 60°, préférablement de pas plus de 45°, différent de la direction verticale vers la buse, plus préférablement la vis alimentant l'au moins un granulat en direction verticale vers la buse.

**3.** Procédé selon la revendication 1 ou 2,

i) l'au moins un granulat employé dans l'étape a) étant placé dans au moins un récipient de stockage qui peut être positionné partiellement ou complètement à l'intérieur de l'imprimante à extrusion tridimensionnelle (3D), et/ou
ii) le boîtier de l'imprimante à extrusion 3D comprenant au moins une entrée pour l'alimentation du granulat dans le boîtier, au moins une vis pour le transport du granulat depuis le récipient de stockage vers la buse, au moins un élément de chauffage et au moins une buse, préférablement l'au moins une buse, l'au moins un élément de chauffage et au moins une partie de l'au moins une vis étant positionnés dans au moins une tête d'impression du boîtier de l'imprimante à extrusion 3D, et/ou
iii) le chauffage de l'au moins un granulat selon l'étape c) étant réalisé dans au moins une tête d'impression de l'imprimante à extrusion 3D et l'au moins une tête d'impression contenant au moins une partie de l'au moins une vis employée dans l'étape b) et au moins une buse, et/ou
iv) l'au moins une vis employée dans l'étape b) étant une vis chauffable.

**4.** Procédé selon l'une quelconque des revendications 1 à 3, l'au moins un granulat étant en outre choisi parmi

i) un granulat comprenant au moins un polymère, comprenant au moins un polymère thermoplastique,
ii) un granulat comprenant au moins une poudre inorganique et au moins un polymère, la poudre inorganique étant une poudre d'au moins un matériau inorganique choisi dans le groupe constitué par un métal, un alliage métallique et un matériau céramique,
iii) un granulat comprenant au moins un matériau de noyau (CM) recouvert d'une couche d'au moins un matériau d'enveloppe (SM),
iv) un granulat comprenant au moins une charge fibreuse (FF) et au moins un polymère, préférablement la charge fibreuse (FF) étant au moins une fibre de carbone, ou
v) un granulat comprenant au moins un polyuréthane thermoplastique.

**5.** Procédé selon l'une quelconque des revendications 1 à 4, l'au moins un granulat étant un mélange (M) comprenant

(a) de 40 à 75 % en volume d'une poudre inorganique (IP) sur la base du volume total du mélange (M),
(b) de 25 à 60 % en volume sur la base du volume total du mélange (M) d'un liant (B) comprenant

(b1) de 50 à 98 % en poids d'au moins un polyoxyméthylène (POM) sur la base du poids total du liant (B),
(b2) de 2 à 35 % en poids d'au moins une polyoléfine (PO) sur la base du poids total du liant (B),
(b3) de 0 à 40 % en poids d'au moins un polymère supplémentaire (FP) sur la base du poids total du liant (B).

**6.** Procédé selon la revendication 5,

i) le mélange (M) comprenant en tant que composant (c) de 0,1 à 5 % en volume d'au moins un dispersant sur la base du volume total du mélange (M), et/ou
ii) la poudre inorganique (IP) étant une poudre d'au moins un matériau inorganique choisi dans le groupe constitué par un métal, un alliage métallique et un matériau céramique, et/ou
iii) le composant (b1) étant un copolymère de polyoxyméthylène (POM) qui est préparé par polymérisation

- d'au moins 50 % en moles d'une source de formaldéhyde (bla),
- de 0,01 à 20 % en moles d'au moins un premier comonomère (blb) de la formule générale (II)

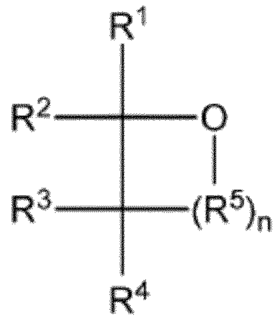

(II),

$R^1$ à $R^4$ étant chacun indépendamment les uns des autres choisis dans le groupe constitué par H, $C_{1-4}$ alkyle et $C_{1-4}$ alkyle substitué par halogène ;
$R^5$ étant choisi dans le groupe constitué par une liaison chimique, un groupe ($-CR^{5a}R^{5b}-$) et un groupe ($-CR^{5a}R^{5b}O-$),
$R^{5a}$ et $R^{5b}$ étant chacun indépendamment l'un de l'autre choisis dans le groupe constitué par H et $C_{1-4}$ alkyle non substitué ou au moins monosubstitué,
les substituants étant choisis dans le groupe constitué par F, Cl, Br, OH et $C_{1-4}$ alkyle ;
n étant 0, 1, 2 ou 3 ;

et
- de 0 à 20 % en moles d'au moins un deuxième comonomère (blc) choisi dans le groupe constitué par un composé de formule (III) et un composé de formule (IV)

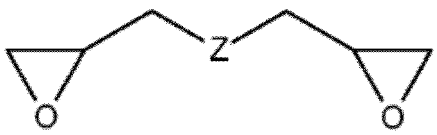

(III),

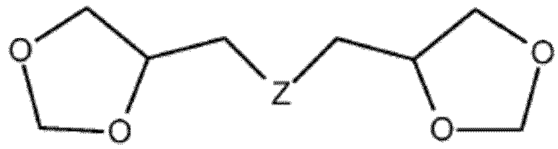

(IV),

Z étant choisi dans le groupe constitué par une liaison chimique, un groupe (-O-) et un groupe ($-O-R^6-O-$),
$R^6$ étant choisi dans le groupe constitué par $C_{1-8}$ alkylène et $C_{3-8}$ cycloalkylène non substitué, et/ou

iv) le polymère supplémentaire (FP) étant au moins un polymère supplémentaire (FP) choisi dans le groupe constitué par un polyéther, un polyuréthane, un polyépoxyde, un polyamide, un polymère aromatique vinylique, un poly(ester de vinyle), un poly(éther de vinyle), un poly((méth)acrylate d'alkyle) et des copolymères correspondants.

**7.** Procédé selon l'une quelconque des revendications 1 à 6, le granulat employé dans l'étape a) ayant

i) une taille de particule dans la plage de 0,4 à 0,9 mm, et/ou
ii) une forme arrondie, le terme « forme arrondie » signifiant que plus de 50 % des particules respectives possèdent une sphéricité de > 0,7, la sphéricité étant déterminé selon la norme ISO 9276-6.

**8.** Procédé selon l'une quelconque des revendications 1 à 7, le rapport longueur sur diamètre de l'au moins une vis employée dans l'étape b) étant inférieur à 12, préférablement inférieur à 8.

**9.** Procédé selon l'une quelconque des revendications 1 à 8, l'au moins un granulat étant transféré par gravité depuis l'au moins un récipient de stockage vers l'au moins une vis, préférablement l'au moins un récipient de stockage

étant positionné sur l'extrémité supérieure de l'au moins une vis et l'au moins un récipient de stockage ayant une ouverture sur sa partie inférieure afin de transférer l'au moins un granulat depuis l'au moins un récipient de stockage vers l'au moins une vis.

**10.** Procédé selon l'une quelconque des revendications 1 à 9, l'objet 3D obtenu dans l'étape e) étant un corps vert tridimensionnel (3D).

**11.** Procédé selon la revendication 10, l'étape e) étant suivie par une étape f), dans laquelle au moins une partie du liant (B) est éliminé du corps vert tridimensionnel pour former un corps brun tridimensionnel (3D).

**12.** Procédé selon la revendication 11, l'étape f) étant suivie par une étape g), dans laquelle le corps brun tridimensionnel (3D) est fritté pour former un corps fritté tridimensionnel (3D).

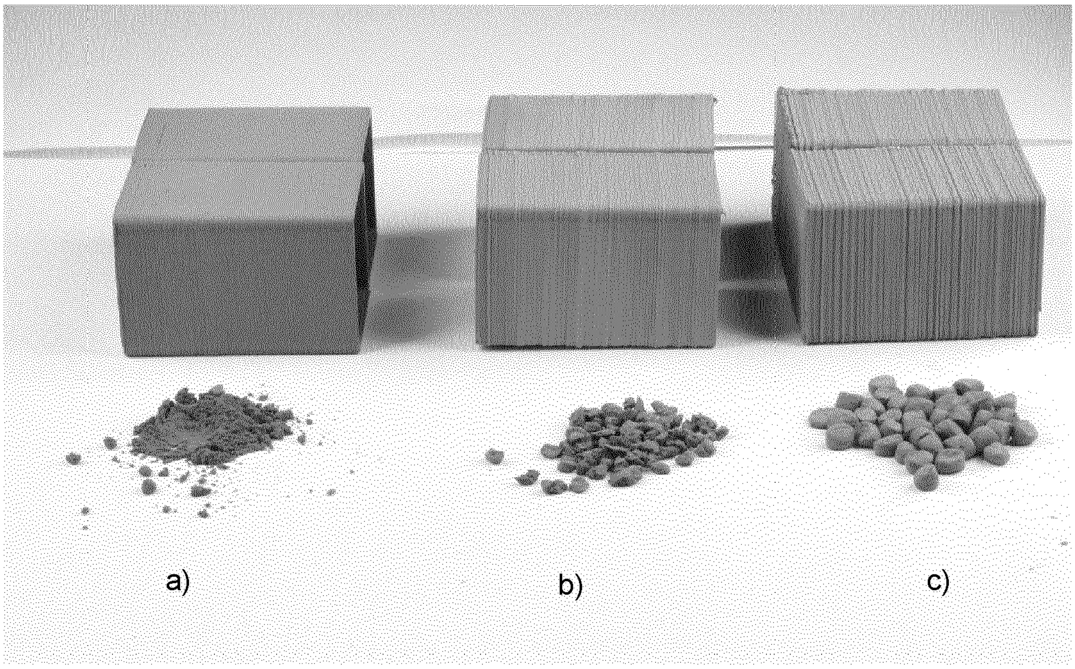


Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5121329 A
- WO 2016012486 A
- WO 2017009190 A
- EP 3112133 A
- WO 2019116088 A
- CN 110315746 A
- US 2015321419 A1
- WO 2019079704 A2
- EP 2019054604 W
- WO 2016184771 A
- WO 2010125009 A


### Non-patent literature cited in the description


- Plastics Additive Handbook. Hanser Publishers, 2001
- Plasticizers. **DAVID F. CADOGAN ; CHRISTOPHER J. HOWICK.** Ullmann's Encyclopedia of Industrial Chemistry. Wiley-VCH, 2000